# FASCICULE DE BREVET EUROPEEN

(11) **EP 0 811 701 B1**
(45) Date de publication et mention de la délivrance du brevet: **17.10.2001**
(21) Numéro de dépôt: 97420077.6
(22) Date de dépôt: 26.05.1997
(51) Int. Cl.: C23C 2/38, C23C 2/00

(54) **Procédé et dispositif de zingage d'un fil d'electroerosion, et fil ainsi obtenu**
Verfahren zum Feuerverzinken eines Funkerosionsdrahtes und hergestellter Draht
Method of hot-dip-zinc-plating an electroerosion wire and wire obtained

(30) Priorité: 04.06.1996 FR 9607026
(43) Date de publication de la demande: 10.12.1997
(73) Titulaire: THERMOCOMPACT, 74370 Metz Tessy (FR)
(72) Inventeur: Lacourcelle, Louis, 34700 Saint Jean de la Blaquiere (FR)
(74) Mandataire: Poncet, Jean-François

(56) Documents cités:
- EP-A- 0 193 422
- CH-A- 655 265
- DE-C- 888 791
- FR-A- 391 448
- FR-A- 1 526 442
- FR-A- 2 261 348
- US-A- 3 391 450
- US-A- 4 287 404
- PATENT ABSTRACTS OF JAPAN vol. 12, no. 371 (M-748), 5 octobre 1988 & JP 63 123525 A (TSUSHIN KOGYO), 27 mai 1988,

## Description

La présente invention concerne les électrodes en forme de fil que l'on utilise dans l'usinage de pièces métalliques par électroérosion.

Dans un tel usinage, décrit par exemple dans le document FR-A-2 418 699, une électrode en forme de fil est entraînée en translation longitudinale, et une portion dudit fil est guidée et tendue selon un segment rectiligne déplacé latéralement selon une trajectoire à proximité d'une pièce métallique à usiner. Un générateur électrique produit une différence de potentiel entre la pièce à usiner et le fil métallique formant l'électrode. Un usinage se produit dans la zone d'usinage comprise entre le fil formant l'électrode et la pièce métallique, et érode progressivement la pièce et le fil.

On a depuis longtemps cherché à améliorer les qualités du fil électrode pour électroérosion, en conciliant une bonne résistance mécanique à la traction, une bonne conductivité électrique du fil, et une meilleure régularité de production des étincelles d'étincelage érosif dans la zone d'usinage comprise entre le fil électrode et la pièce à usiner.

Par exemple, le document US-A-4 287 404 décrit un procédé et un dispositif de fabrication d'un fil électrode pour électroérosion ayant une âme filiforme entourée d'une couche de métal à faible température de vaporisation tel que le zinc, le cadmium, l'étain, le plomb, l'antimoine et le bismuth. Le dépôt de la couche périphérique métallique est effectué par une étape de dépôt électrolytique suivie d'une étape de tréfilage. Un tel procédé présente l'inconvénient de produire un fil électrode dont la couche périphérique se vaporise trop vite et assure une protection insuffisante de l'âme pendant l'électroérosion.

On a trouvé avantage à échauffer le fil après dépôt électrolytique de la couche superficielle de métal à faible température de vaporisation, comme enseigné dans le document EP-A-185 492, de façon à réaliser un alliage diffusé. Mais un tel procédé ne permet pas de produire à grande vitesse un fil électrode à couche superficielle d'alliage diffusé d'épaisseur importante.

Le document US-A-4 169 426 décrit un autre procédé de fabrication d'un fil électrode pour électroérosion ayant une âme filiforme entourée d'une couche métallique, dans lequel on fait passer en continu un fil conducteur d'entrée dans un bain de métal fondu, puis on refroidit rapidement le fil pour éviter la formation de composés intermétalliques à l'interface entre l'âme filiforme et la couche métallique périphérique. On soumet ensuite le fil à un traitement thermique pendant plusieurs minutes à 320° C, avant de le tréfiler pour l'amener au diamètre final désiré. Un tel procédé présente également l'inconvénient d'être lent, notamment à cause de la durée du traitement thermique nécessaire pour permettre un tréfilage ultérieur sans dégradation de la couche métallique périphérique.

Pour augmenter la rapidité de fabrication du fil d'électroérosion, le document CH-A-655 265 propose de préchauffer le fil conducteur d'entrée par effet Joule, en le faisant parcourir par un courant électrique approprié, avant de le faire passer dans un bain de métal fondu. En sortie du bain de métal fondu, le fil est rapidement refroidi pour éviter la formation de composés intermétalliques à l'interface entre l'âme et le revêtement. Le fil peut ensuite être tréfilé pour l'amener au diamètre final désiré. Ce document enseigne clairement que le tréfilage est rendu possible en raison de la non formation de composés intermétalliques à l'interface entre l'âme et le revêtement.

On constate toutefois qu'il est très difficile d'effectuer un tréfilage postérieur sans dégrader considérablement la couche métallique périphérique. En effet, cette couche tend à se détacher de l'âme, par l'effet des contraintes mécaniques appliquées par la filière de tréfilage.

Les documents US-A-3 391 450 et FR-A-1 526 442 décrivent un procédé combiné de recuit et d'étamage d'un fil de cuivre, dans lequel le recuit est assuré en faisant parcourir le fil par un courant électrique avant, pendant et après son passage dans un bain d'étain fondu à température relativement basse, le fil étant chauffé par le courant à une température voisine de celle du bain d'étain fondu. Il n'est fait mention ni de tréfilage, ni d'application à l'électroérosion, ni des problèmes d'adhérence de la couche métallique périphérique.

Le problème proposé par la présente invention est ainsi de concevoir des moyens permettant, de façon simple et peu onéreuse, d'améliorer l'accrochage de la couche métallique périphérique sur l'âme filiforme dans un procédé rapide de fabrication d'un fil électrode pour électroérosion passant en continu dans un bain de métal fondu, afin de permettre le tréfilage ultérieur du fil sans dégradation sensible de la couche métallique périphérique. On cherche ainsi à produire à grande vitesse un fil électrode pour électroérosion à couche superficielle d'alliage diffusé d'épaisseur importante.

L'invention résulte de l'observation surprenante selon laquelle l'accrochage de la couche métallique sur l'âme centrale est considérablement amélioré lorsqu'on échauffe suffisamment le fil par effet Joule pendant son passage dans le bain de métal fondu.

Cette constatation va directement à l'encontre de l'enseignement des documents US-A-4 169 426 et CH-A-655 265, qui préconisent d'éviter au maximum l'échauffement de l'âme filiforme, pour éviter la formation de composés intermétalliques à l'interface entre l'âme et la couche métallique périphérique.

Ainsi, pour atteindre ces objets ainsi que d'autres, l'invention propose un procédé de fabrication d'un fil électrode pour électroérosion ayant une âme filiforme entourée d'une couche métallique, dans lequel on fait passer en continu un fil conducteur d'entrée dans un bain de métal fondu à faibles températures de fusion et de vaporisation, puis on refroidit le fil et on le tréfile pour l'amener au diamètre désiré ; pendant son passage dans le bain de métal fondu, on échauffe le fil par effet Joule en faisant passer un courant électrique approprié dans le tronçon de fil traversant le bain de métal fondu.

Selon un mode de réalisation avantageux, on poursuit l'échauffement du fil par effet Joule après la sortie du fil hors du bain de métal fondu, en faisant passer un courant électrique dans un tronçon approprié du fil en aval du bain de métal fondu.

De bons résultats sont également obtenus en assurant en outre un préchauffage du fil par effet Joule, en faisant passer un courant électrique dans un tronçon approprié au fil er. amont du bain de métal fondu.

Par mesure de simplification, le ccurant électrique traversant le tronçon amont et/ou le tronçon aval du fil peut être identique au courant électrique traversant le bain de métal fondu.

Le procédé s'applique par exemple à un bain de métal fondu constitué de zinc ou d'un alliage de zinc.

L'alliage de zinc peut par exemple contenir de l'aluminium ou du cuivre.

L'invention propose également l'utilisation d'un dispositif pour appliquer en continu une couche métallique sur une âme filiforme, le. dispositif comprenant :
- un récipient adapté pour contenir un bain de métal fondu et pour permettre le passage en continu d'un fil conducteur à travers le bain de métal fondu,
- des moyens de guidage et d'entraînement de fil pour guider le fil et l'entraîner à travers le bain de métal fondu,
- des moyens pour extruder le fil en aval du récipient de bain de métal fondu,
- une source de courant électrique et des conducteurs venant au contact du fil en amont et en aval du récipient de bain de métal fondu, pour faire passer un courant électrique dans le fil lors de son passage dans le bain de métal fondu pour échauffer ledit fil par effet Joule,
pour la fabrication d'un fil électrode pour électroérosion.

D'autres objets, caractéristiques et avantages de la présente invention ressortiront de la description suivante de modes de réalisation particuliers, faite en relation avec les figures jointes, parmi lesquelles:
- la figure 1 est une représentation schématique d'un dispositif de production d'un fil électrode pour électroérosion selon un mode de réalisation de la présente invention ; et
- la figure 2 est une vue en perspective illustrant schématiquement un tronçon de fil électrode pour électroérosion selon l'invention.

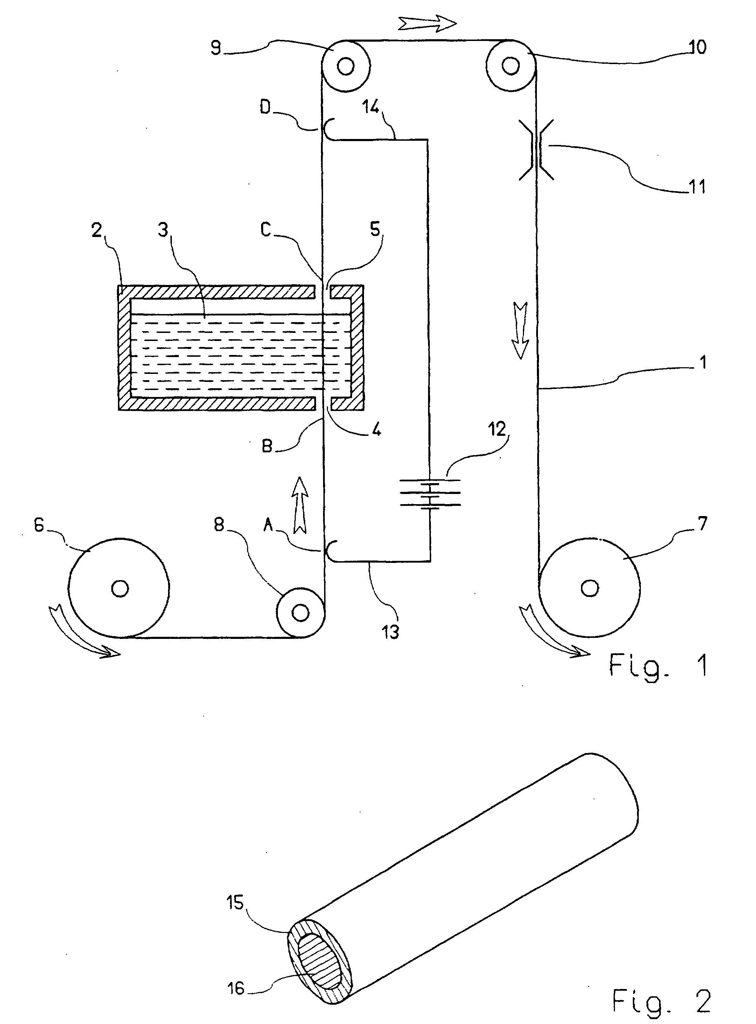

Dans le mode de réalisation illustré sur la figure 1, un dispositif selon l'invention pour la production d'un fil électrode 1 pour électroérosion comprend un récipient 2 adapté pour contenir un bain de métal fondu 3. Des moyens de chauffage, non représentés, maintiennent le bain à une température appropriée pour les conditions de fusion du métal pendant la fabrication du fil 1. Le récipient 2 comprend un orifice d'entrée 4 et un orifice de sortie 5, adaptés pour permettre le passage en continu d'un fil conducteur, de préférence de bas en haut, à travers le bain de métal fondu 3.

Des moyens ce guidage et d'entraînement de fil permettent de guider le fil 1 et de l'entraîner en translation longitudinale continue à travers le bain de métal fondu 3. Par exemple, le fil 1 est délivré à partir d'une bobine amont 6 jusqu'à une bobine aval 7, en passant sur des poulies de renvoi 8, 9 et 10 et à travers le bain de métal fondu 3 entre les orifices d'entrée 4 et de sortie 5 du récipient 2.

Le dispositif comprend en outre une ou plusieurs filières 11 pour extruder le fil 1 après son passage dans le récipient 2, et avant son enroulement sur la bobine aval 7.

Le dispositif comprend aussi une source de courant électrique 12, connectée à des conducteurs 13 et 14 venant en contact du fil 1 respectivement en un point A en amont du récipient 2 et en un point D en aval du récipient 2. La source de courant 12 fait ainsi passer un courant électrique approprié dans le fil 1 pendant son passage dans le bain de métal fondu 3, assurant un échauffement complémentaire du fil 1 par effet Joule.

De préférence, l'échauffement complémentaire du fil 1 par effet Joule doit permettre d'amener la périphérie du fil 1 à une température suffisamment élevée pour éviter la formation de phases d'alliage fragiles à l'interface entre l'âme 16 du fil et son enrobage 15. Par exemple, dans le cas d'un fil de cuivre enrobé de zinc, on évite la formation de phases γ, δ ou ε susceptibles de fragiliser l'interface.

Le courant électrique approprié peut avantageusement être tel que le fil 1 est sensiblement amené au rouge pendant son passage dans le bain de métal fondu 3.

Selon un premier mode de réalisation, le point de contact amont A est à proximité immédiate de l'orifice d'entrée 4 du récipient 2, et le point de contact aval D est à proximité immédiate de l'orifice de sortie 5 du récipient 2. Dans ce cas. l'échauffement complémentaire du fil 1 par effet Joule se produit dans le seul tronçon BC du fil traversant le récipient 2 contenant le bain de métal fondu 3.

De façon avantageuse, on peut placer le point de contact D à l'écart de l'orifice de sortie 5 du récipient 2, pour poursuivre l'échauffement du fil 1 par effet Joule après sa sortie hors du bain de métal fondu 3, en faisant ainsi passer le courant électrique dans le tronçon CD du fil en aval du bain de métal fondu 3. On peut ainsi choisir la longueur du tronçon CD de fil pour assurer un échauffement du fil pendant une durée suffisante pour produire une inter-diffusion du métal périphérique d'apport et du métal constituant l'âme filiforme.

Dans ce mode de réalisation, le courant électrique traversant le tronçon aval CD de fil est identique au courant électrique traversant le bain de métal fondu 3. En alternative, on peut naturellement concevoir un circuit électrique permettant de faire circuler un courant différent dans le tronçon aval CD.

De façon avantageuse, on peut assurer un préchauffage du fil par effet Joule en écartant le point de contact amont A par rapport à l'orifice d'entrée 4. On fait ainsi passer un courant électrique dans un tronçon approprié du fil AB en amont du bain de métal fondu 3.

Dans ce mode de réalisation, le courant électrique traversant le tronçon amont AB de fil est identique au courant électrique traversant le bain de métal fondu 3. En alternative, on peut concevoir des contacts électriques permettant d'assurer le passage d'un courant électrique différent dans le tronçon amont AB de fil.

Dans le fonctionnement d'un tel dispositif de la figure 1, un fil conducteur d'entrée enroulé sur la bobine amont 6 se dévide de la bobine amont 6, en passant sur la première poulie de renvoi 8, puis vient au contact du conducteur 13 au point A. Le courant électrique débité par le générateur de courant 12 passe alors dans le tronçon amont de fil AB, et échauffe le fil par effet Joule, de sorte que le fil pénètre dans le récipient 2 par l'orifice d'entrée 4 en étant déjà à température élevée. Pendant son passage à l'intérieur du récipient 2 contenant un bain de métal fondu 3, le fil est également traversé par le courant débité par le générateur 12, ledit courant prolongeant l'échauffement du fil par effet Joule. Lors de son passage dans le bain de métal fondu 3, le fil se charge d'une couche superficielle de métal fondu. L'échauffement par effet Joule se poursuit le long du tronçon aval CD, jusqu'au contact aval D avec le conducteur 14. Le fil se refroidit ensuite, puis passe dans la ou les filières 11 dans lesquelles il est extrudé pour être amené au diamètre final désiré. Le fil extrudé s'enroule alors sur la bobine aval 7.

La fabrication du fil électrode selon l'invention s'effectue ainsi par passage en continu du fil 1 dans un bain de métal fondu 3 à faible point de vaporisation et à tension de vapeur élevée, puis en refroidissant le fil et en le tréfilant. pour l'amener au diamètre désiré. Pendant son passage dans le bain de métal fondu 3, on échauffe le fil par effet Joule en faisant passer un courant électrique approprié dans le tronçon de fil BC traversant le bain de métal fondu 3. On constate qu'un tel procédé permet d'améliorer sensiblement l'adhérence de la couche métallique superficielle épaisse de métal déposée sur l'âme lors du passage dans le bain de métal fondu 3, de sorte que la couche métallique superficielle n'est pas dégradée lors du passage dans les filières de tréfilage 11.

Le métal fondu présent dans le bain de métal fondu 3 peut être du zinc, ou un alliage de zinc.

Par exemple, le métal fondu peut être un alliage de zinc et d'au moins un autre métal tel que l'aluminium ou le cuivre.

L'âme du fil, formée par le fil conducteur d'entrée se déroulant de la bobine amont 6, peut par exemple être en cuivre ou en alliage de cuivre.

Dans le mode de réalisation illustré sur la figure 2, un fil électrode obtenu par un procédé précédemment décrit comprend une couche superficielle 15 épaisse d'alliage diffusé de zinc, entourant une âme 16. L'âme 16 peut être en cuivre ou alliage de cuivre, par exemple.

Grâce à la bonne adhérence de la couche superficielle métallique sur l'âme, le calibrage par les filières 11 peut être effectué à la même vitesse que le passage du fil dans le bain de métal fondu 3. Il en résulte un procédé particulièrement rapide et peu onéreux de fabrication du fil électrode pour électroérosion.

La présente invention n'est pas limitée aux modes de réalisation qui ont été explicitement décrits, mais elle en inclut les diverses variantes et généralisations contenues dans le domaine des revendications ci-après.

## Revendications

1. Procédé de fabrication d'un fil électrode (1) pour électroérosion ayant une âme filiforme (16) entourée d'une couche métallique (15), dans lequel on fait passer en continu un fil conducteur d'entrée dans un bain de métal fondu (3) à faibles températures de fusion et de vaporisation, puis on refroidit le fil (1) et on le tréfile pour l'amener au diamètre désiré, **caractérisé en ce que**, pendant son passage dans le bain de métal fondu (3), on échauffe le fil (1) par effet Joule en faisant passer un courant électrique approprié dans le tronçon de fil (BC) traversant le bain de métal fondu (3).

2. Procédé selon la revendication i, **caractérisé en ce qu'**on poursuit l'échauffement du fil (1) par effet Joule après la sortie du fil (1) hors du bain de métal fondu (3), en faisant passer un courant électrique dans un tronçon approprié (CD) du fil (1) en aval du bain de métal fondu (3).

3. Procédé selon la revendication 2, **caractérisé en ce que** le courant électrique traversant le tronçon aval (CD) de fil est identique au courant électrique traversant le bain de métal fondu (3).

4. Procédé selon l'une quelconque des revendications 1 à 3, **caractérisé en ce qu'**on assure un préchauffage du fil par effet Joule, en faisant passer un courant électrique dans un tronçon approprié (AB) du fil en amont du bain de métal fondu (3).

5. Procédé selon la revendication 4, **caractérisé en ce que** le courant électrique traversant le tronçon amont (AB) de fil est identique au courant électrique traversant le bain de métal fondu (3).

6. Procédé selon l'une quelconque des revendications 1 à 5, **caractérisé en ce que** le métal fondu est du zinc ou un alliage de zinc.

7. Procédé selon la revendication 6, **caractérisé en ce que** le métal fondu est un alliage de zinc et d'au moins un autre métal tel que l'aluminium ou le cuivre.

8. Procédé selon l'une quelconque des revendications 1 à 7, **caractérisé en ce que** le courant électrique approprié est tel que le fil (1) est sensiblement amené au rouge pendant son passage dans le bain de métal fondu (3).

9. Utilisation d'un dispositif pour appliquer en continu une couche métallique (15), sur une âme filiforme (16), le dispositif comprenant :
- un récipient (2) adapté pour contenir un bain de métal fondu (3) et pour permettre le passage en continu d'un fil conducteur (1) à travers le bain de métal fondu (3),
- des moyens de guidage et d'entraînement de fil (6, 7, 8, 9, 10, 4, 5) pour guider le fil (1) et l'entrainer à travers le bain de métal fondu (3),
- des moyens (11) pour extruder le fil (1) en aval du récipient (2) de bain de métal fondu (3),
- une source de courant électrique (12) et des conducteurs (13, 14) venant au contact du fil (1) en amont (A) et en aval (D) du récipient (2) de bain de métal fondu (3), pour faire passer un courant électrique dans le fil (1) lors de son passage dans le bain de métal fondu (3) pour échauffer ledit fil (1) par effet Joule,
pour la fabrication d'un fil électrode pour électroérosion.

10. Utilisation selon la revendication 9, **caractérisée en ce que** les conducteurs (13, 14) viennent en contact du fil en amont (A) et/ou en aval (D) à l'écart du récipient (2), pour assurer en outre un chauffage par effet Joule du fil (1) en amont et/ou en aval de sa traversée du bain de métal fondu (3).

11. Utilisation selon l'une des revendications 9 ou 10, **caractérisée en ce que** le courant électrique dans le fil (1) est tel que le fil est sensiblement amené au rouge pendant son passage dans le bain de métal fondu (3).

## Patentansprüche

1. Verfahren zur Herstellung einer Drahtelektrode (1) für die Funkenerosion, die eine von einer Metallschicht (15) umgebene drahtförmige Seele (16) hat, bei welchem ein Eingangs-Leitungsdraht kontinuierlich durch ein Bad (3) eines geschmolzenen Metalls mit mäßigen Schmelz- und Verdampfungstemperaturen hindurchgeführt wird, worauf der Draht (1) gekühlt und gezogen wird, um ihn auf den gewünschten Durchmesser zu überführen, **dadurch gekennzeichnet, daß** der Draht (1) während seines Durchgangs durch das Bad (3) eines geschmolzenen Metalls mit Joulescher Wärme erwärmt wird, indem ein passender elektrischer Strom durch den Drahtabschnitt (BC) hindurchgeleitet wird, der das Bad (3) eines geschmolzenen Metalls durchquert.

2. Verfahren nach Anspruch 1, **dadurch gekennzeichnet, daß** die Erwärmung des Drahtes (1) durch Joulesche Wärme nach dem Austritt des Drahtes (1) aus dem Bad (3) eines geschmolzenen Metalls durchgeführt wird, indem ein elektrischer Strom durch einen passenden Abschnitt (CD) des Drahtes (1) stromabwärts von dem Bad (3) eines geschmolzenen Metalls hindurchgeleitet wird.

3. Verfahren nach Anspruch 2, **dadurch gekennzeichnet, daß** der elektrische Strom, der durch den stomabwärts verlaufenden Abschnitt (CD) des Drahtes hindurchgeleitet wird, identisch mit dem elektrischen Strom ist, der das Bad (3) eines geschmolzenen Metalls durchquert.

4. Verfahren nach einem der Ansprüche 1 bis 3, **dadurch gekennzeichnet, daß** eine Vorwärmung des Drahtes durch Joulesche Wärme gesichert wird, indem ein elektrischer Strom durch einen passenden Abschnitt (AB) des Drahtes stromaufwärts von dem Bad (3) eines geschmolzenen Metalls hindurchgeleitet wird.

5. Verfahren nach Anspruch 4, **dadurch gekennzeichnet, daß** der elektrische Strom, der durch den stromaufwärts verlaufenden Abschnitt (AB) des Drahtes hindurchgeleitet wird, identisch mit dem elektrischen Strom ist, der das Bad (3) eines geschmolzenen Metalls durchquert.

6. Verfahren nach einem der Ansprüche 1 bis 5, **dadurch gekennzeichnet, daß** das geschmolzene Metall Zink oder eine Zinklegierung ist.

7. Verfahren nach Anspruch 6, **dadurch gekennzeichnet, daß** das geschmolzene Metall eine Zinklegierung und wenigstens ein weiteres Metall wie bsp. Aluminium oder Kupfer ist.

8. Verfahren nach einem der Ansprüche 1 bis 7, **dadurch gekennzeichnet, daß** der passende elektrische Strom ein solcher ist, daß der Draht (1) bei seinem Durchgang durch das Bad (3) eines geschmolzenen Metalls im wesentlichen zum Glühen gebracht wird.

9. Verwendung einer Einrichtung zur kontinuierlichen Anbringung einer Metallschicht (15) auf einer drahtförmigen Seele (16), wobei die Einrichtung besteht aus:
- einem Behälter (2), der zur Aufnahme eines Bades (3) eines geschmolzenen Metalls angepaßt ist und den kontinuierlichen Durchgang eines Leitungsdrahtes (1) quer durch das Bad (3) eines geschmolzenen Metalls erlaubt,
- Mitteln zur Führung und zur Mitnahme des Drahtes (6, 7, 8, 9, 10, 4, 5), um den Draht (1) zu führen und quer durch das Bad (3) eines geschmolzenen Metalls hindurch mitzunehmen,
- Mitteln (11) zum Extrudieren des Drahtes (1) stromabwärts von dem Behälter (2) des Bades (3) eines geschmolzenen Metalls,
- einer elektrischen Stromquelle (12) und Leitern (13, 14), die in Kontakt mit dem Draht (1) stromaufwärts (A) und stromabwärts (D) von dem Behälter (2) des Bades (3) eines geschmolzenen Metalls kommen, um einen elektrischen Strom durch den Draht (1) hindurch zu leiten bei seinem Durchgang durch das Bad (3) eines geschmolzenen Metalls, um den besagten Draht (1) durch Joulesche Wärme zu erwärmen,
für die Herstellung einer Drahtelektrode für die Funkenerosion.

10. Verwendung nach Anspruch 9, **dadurch gekennzeichnet, daß** die Leiter (13, 14) mit dem Draht stromaufwärts (A) und/ oder stromabwärts (D) in Bezug auf den Behälter (2) in Kontakt kommen, um außerdem eine Erwärmung des Drahtes (1) durch Joulesche Wärme stromaufwärts und/ oder stromabwärts von seiner Durchquerung des Bades (3) eines geschmolzenen Metalls zu sichern.

11. Verwendung nach einem der Ansprüche 9 oder 10, **dadurch gekennzeichnet, daß** der elektrische Strom in dem Draht (1) ein solcher ist, daß der Draht bei seinem Durchgang durch das Bad (3) eines geschmolzenen Metalls im wesentlichen zum Glühen gebracht wird.

## Claims

1. Method of manufacturing a spark erosion electrode wire (1) having a filamentary core (16) surrounded by a metallic layer (15), wherein an inlet conductor wire is caused to pass continuously through a bath (3) of molten metal having low melting and boiling points, after which the wire (1) is cooled and drawn to the required diameter, **characterized in that**, while it is passing through the bath (3) of molten metal, the wire (1) is heated by the Joule effect by causing an appropriate electric current to flow through the wire section (BC) passing through the bath (3) of molten metal.

2. Method according to claim 1, **characterized in that** heating of the wire (1) by the Joule effect is continued after the wire (1) leaves the bath (3) of molten metal by passing an electric current through an appropriate section (CD) of the wire (1) downstream of the bath (3) of molten metal.

3. Method according to claim 2, **characterized in that** the electric current flowing through the downstream wire section (CD) is the same as the electric current flowing through the bath (3) of molten metal.

4. Method according to any one of claims 1 to 3, **characterized in that** the wire is preheated by the Joule effect by passing an electric current through an appropriate section. (AB) of the wire upstream of the bath (3) of molten metal.

5. Method according to claim 4, **characterized in that** the electric current flowing through the upstream wire section (AB) is the same as the electric current flowing through the bath (3) of molten metal.

6. Method according to any one of claims 1 to 5, **characterized in that** the molten metal is zinc or zinc alloy.

7. Method according to claim 6, **characterized in that** the molten metal is an alloy of zinc and at least one other metal such as aluminum or copper.

8. Method according to any one of claims 1 to 7, **characterized in that** the appropriate electric current is such that the wire (1) is substantially at red heat while passing through the bath (3) of molten metal.

9. Use of a device for applying continuously a metallic layer (15) on a filamentary core (16), the device comprising:
- a container (2) adapted to contain a bath (3) of molten metal and to enable a conductive wire (1) to be passed continuously through the bath (3) of molten metal,
- wire guide and drive means (6, 7, 8, 9, 10, 4, 5) for guiding the wire (1) and driving it through the bath (3) of molten metal,
- means (11) for extruding the wire (1) downstream of the container (2) of the bath (3) of molten metal,
- a source (12) of electric current and conductors (13, 14) coming into contact with the wire (1) upstream (A) and downstream (D) of the container (2) of the bath (3) of molten metal to pass an electric current through the wire (1) while it is passing through the bath (3) of molten metal in order to heat said wire (1) by the Joule effect,
for manufacturing a spark erosion electrode wire.

10. Use according to claim 9, **characterized in that** the conductors (13, 14) come into contact with the wire upstream (A) and/or downstream (D) at a distance from the container (2), in order to procure further heating by the Joule effect of the wire (1) upstream and/or downstream of its passage through the bath (3) of molten metal.

11. Use according to either claim 9 or 10,
**characterized in that** the electric current in the wire (1) is such that the wire is substantially at red heat while passing through the bath (3) of molten metal.
